# EUROPEAN PATENT APPLICATION

(11) **EP 2 442 533 A1**
(43) Date of publication of application: **18.04.2012**
(21) Application number: 11184617.6
(22) Date of filing: 11.10.2011
(51) Int. Cl.: H04L 29/08, H04W 52/02, H04L 12/28

(54) **Method of enabling synchronization between devices, user device, and computer-readable storage medium thereof**

(30) Priority: 12.10.2010 KR 20100099289
(71) Applicant: Samsung Electronics Co., Ltd., Suwon-si, Gyeonggi-do (KR)
(72) Inventor: Jung, Ji-woon, Gyeonggi-do (KR); Jang, Won-chang, Seoul (KR); Shim, Hyo-sun, Gyeonggi-do (KR); Kim, Dae-hyun, Gyeonggi-do (KR); Park, Sun-min, Seoul (KR)
(74) Representative: Jenkins, Richard Gavin

(57) **Abstract**

A method, user device, and computer-readable storage medium enable synchronization between devices. The method includes connecting a second device (120,130) to a first device (110), requesting the first device (110) to transform data to be received by the second device (120,130) and disconnecting the second device (120,130) to the first device (110), re-connecting the second device (120,130) to the first device (110) in response to the occurrence of a first event set at the second device (120,130), and receiving the transformed data from the first device (120,130).

## Description

### CROSS-REFERENCE TO RELATED APPLICATION(S) AND CLAIM OF PRIORITY

The present application is related to and claims the benefit of Korean Patent Application No. 10-2010-0099289, filed on October 12, 2010, in the Korean Intellectual Property Office, the disclosure of which is incorporated herein in its entirety by reference.

### TECHNICAL FIELD OF THE INVENTION

The present invention relates to a method of enabling synchronization between devices, a user interface capable of performing the method, and a computer-readable storage medium thereof.

### BACKGROUND OF THE INVENTION

Synchronization between devices may include equalizing targets for synchronization between different devices. The targets for synchronization may include a large amount of content data, such as photographs, moving images, directories, music, documents, mail, or news, document data, or metadata of target files. The synchronization between the devices may be enabled on a wireless network and a wired network.

The wireless network synchronization between the devices may be, for example, wireless fidelity (Wi-Fi) synchronization between the devices. Since a channel for the Wi-Fi synchronization between the devices has a smaller bandwidth than a wired channel, it may take a large amount of time to enable synchronization between the devices, thus causing high power consumption. Wired-network synchronization between devices may involve physically connecting the devices until the synchronization is accomplished and the user needs to perform the physical connection between the devices.

### SUMMARY OF THE INVENTION

To address the above-discussed deficiencies of the prior art, it is a primary object to provide a method of automatically synchronizing targets for synchronization between devices, a user interface capable of performing the method, and a computer-readable storage medium thereof.

According to an aspect of the present disclosure, there is provided a method of enabling synchronization between devices, the method including: connecting a second device to a first device; requesting the first device to transform data to be received by the second device and disconnecting the second device to the first device; re-connecting the second device to the first device in response to the occurrence of a first event set at the second device: and receiving the transformed data from the first device.

The first event may be a time at which the transforming of data is finished in the first device. The connecting of the second device to the first device may be performed at periods set at the second device. Alternatively, the connecting of the second device to the first device may be performed in response to the occurrence of a second event set at the second device. The second event may occur based on at least one of a start of a specific operation of the second device, an end of the specific operation of the second device, and a specific time.

The connecting of the second device to the first device may include transmitting an auto-boot signal for automatically booting the first device from the second device to the first device.

The receiving of the transformed data may include automatically shutting down, by the second device, power of the first device when the receiving of the transformed data is finished.

The data may be a target for synchronization between the first and second devices.

According to another aspect of the present disclosure, there is provided a method of enabling synchronization between devices, the method including: connecting a second device to a first device; requesting the first device to transform data to be received by the second device and disconnecting the second device to the first device; re-connecting the second device to the first device when a connection request signal is received from the first device; and receiving the transformed data from the first device.

The connection request signal received from the first device may be based on a time point at which the transforming of the data is finished by the first device.

According to another aspect of the present disclosure, there is provided an user device including: a network interface unit configured to interface with a network; a processor configured to request a device connected to the user device through the network interface unit to transform data to be received from the device, disconnect between the user device and the device, re-connect the user device to the device through the network interface unit when a first event occurs, and receive the transformed data from the device; a storage unit configured to store information regarding the first event and the received transformed data; and a user interface unit configured to receive the information regarding the first event.

The storage unit may further store period information regarding periods at which the device and the user device are connected, and the processor may connect the device and the user device based on the period information.

The storage unit may further store information regarding a second event, and the processor may connect the device and the user device in response to the occurrence of the second event.

According to another aspect of the present disclosure, there is provided a storage medium having embodied thereon a computer program for executing the above-described method of enabling synchronization between devices.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 is a construction diagram of a network according to the present disclosure;

FIGURE 2 is a block diagram showing the structure of a user device according the present disclosure;

FIGURE 3A shows a screen to which event setting information may be input, according to the present disclosure;

FIGURE 3B shows a screen at which a condition for automatically controlling power of a personal computer (PC) is set, according to the present disclosure;

FIGURE 4 is a flowchart illustrating a method of enabling synchronization between devices in a user device according to the present disclosure;

FIGURE 5 is a flowchart illustrating a method of enabling synchronization between devices in a user device according to the present disclosure;

FIGURE 6 is a block diagram showing the structure of a PC according to the present disclosure;

FIGURE 7 is a flowchart illustrating a method of enabling synchronization between devices in a PC according to the present disclosure;

FIGURE 8 is a flowchart illustrating a method of enabling synchronization between devices in a PC, according to the present disclosure;

FIGURE 9 is a flowchart illustrating a method of enabling synchronization between devices in a PC, according to the present disclosure;

FIGURE 10 is a flowchart illustrating a method of enabling synchronization between a user device (or a second device) and a PC (or a first device), according to the present disclosure;

FIGURE 11 is a flowchart illustrating a method of enabling synchronization between a user device (or a second device) and a PC (or a first device), according to the present disclosure;

FIGURE 12 is a flowchart illustrating a method of enabling synchronization between a user device (or a second device) and a PC (or a first device), according to the present disclosure; and

FIGURE 13 is a flowchart illustrating a method of enabling synchronization between a user device (or a second device) and a PC (or a first device), according to the present disclosure.

### DETAILED DESCRIPTION OF THE INVENTION

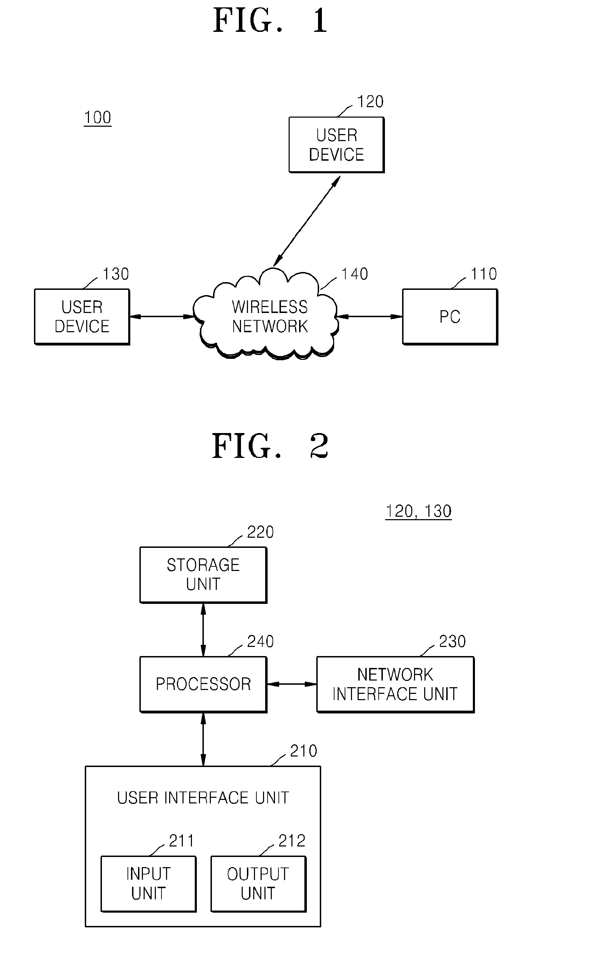

FIGURES 1 through 13, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged network.

FIGURE 1 is a construction diagram of a network 100 according the present disclosure.

The network 100 may include a personal computer (PC) 110, a plurality of user devices 120 and 130, and a wireless network 140. The network 100 may enable signals or data to be received and transmitted between the PC 110 and the user device 120, between the PC 110 and the user device 130, between the user devices 120 and 130 , and between the user devices 120 and 130 and PC 110 via the wireless network 140.

Although the PC 110 may be referred to as an information provider capable of providing data to the user devices 120 and 130 via the wireless network 140 or an on-line information provider or server capable of providing web content, the present disclosure is not limited thereto. Herein, the PC 110 according to embodiments of the present disclosure may be referred to as a first device. Data transmitted from the PC 110 to the user devices 120 and 130 may include data to be synchronized between the PC 110 and the user devices 120 and 130. The data to be synchronized may be referred to as targets for synchronization between the PC 110 and the user devices 120 and 130. The data to be synchronized may include a large amount of content data, such as photographs, moving images, directories, address book, music, documents, mail, or news, document data, or metadata of a target file or metadata of a file to be synchronized.

Each of the user devices 120 and 130 may be a device capable of downloading data from the PC 110 or uploading data to the PC 110 via the wireless network 140, which may be a mobile device, a digital camera, a digital photo frame, or an Internet protocol television (IPTV) . The mobile device may be a portable device, such as a portable phone, a Smartphone, a personal digital assistant (PDA), a portable multi-media player (PMP), a navigation device, or a game player. The IPTV may be included in a mobile device. The IPTV may be defined as a terminal for digital broadcasting. Herein, each of the user devices 120 and 130 according to embodiments of the present disclosure may be referred to as a second device. The user devices 120 and 130 may function as information providers of other user devices, such as the PC 110, according to circumstances. For example, the user device 120 may function as an information provider of the user device 130. In this example, the user device 120 may be referred to as a first device, like the PC 110, and the user device 130 may be referred to as a second device. The user device 130 may also function as an information provider of the user device 120. In this example, the user device 130 may be referred to as a first device, and the user device 120 may be referred to as a second device.

Accordingly, in the description of the embodiments of the present disclosure, a first device may be interpreted as a device corresponding to an information provider, an on-line information provider, or a server, and a second device may be interpreted as a device configured to download data from the information provider or upload data thereto.

The wireless network 140 may be at least one of a Zigbee, a Wi-Fi, a Bluetooth, an IEEE802. 11, a Home Radio Frequency (HomeRF), an Infrared Data Association (IrDA), an Ultra WideBand (UWB), and a wireless protocol network, such as a wireless IEEE 1394 network, the Internet, a mobile communication network, a broadcasting network, a cable TV network, and a satellite network, but the present disclosure is not limited thereto.

Each of the user devices 120 and 130 of FIGURE 1 may be configured as shown in FIGURE 2, which is a block diagram showing the structure of the user devices 120 and 130 according the present disclosure. Referring to FIGURE 2, each of the user devices 120 and 130 may include a user interface unit 210, a storage unit 220, a network interface unit 230, and a processor 240.

However, each of the user devices 120 and 130 may be embodied using a larger or smaller number of components than the number of components shown in FIGURE 2. For example, in each of the user devices 120 and 130, the storage unit 220 and the network interface unit 230 may be included in the processor 240.

In addition, the user device 120 may have a different configuration than the user device 130. For example, when the user device 120 is a mobile device and the user device 130 is a TV, the user devices 120 and 130 may have different components. Even if both the user devices 120 and 130 are mobile devices, the user devices 120 and 130 may have different components according to a model. Accordingly, the components of the user devices 120 and 130 are not limited to the ones shown in FIGURE 2.

The user interface unit 210 may include an input unit 211 and a display unit 212. A user may input information, commands, or data using the input unit 211. A signal transmitted or input from the input unit 211 to the processor 240 may be referred to as input information, an input command, an input signal, or input data. The input unit 211 may be configured as a touch input unit.

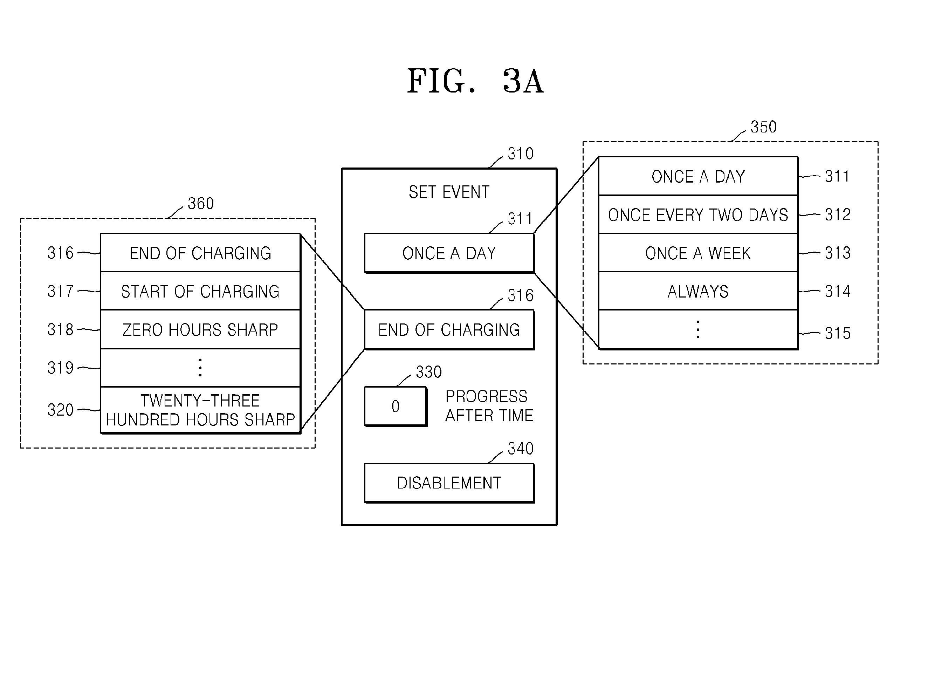

In various embodiments of the present disclosure, information that may be input using the input unit 211 may include information regarding events, which may include event setting information and event type information. The event setting information may refer to condition information required for causing an event. The event type information may refer to information regarding the purpose of the caused event. In the various embodiments of the present disclosure, the event type information may include information regarding an event based on a data transformation end time (or a data converting end time) and an event based on an inter-device connection time (or a inter-device connection start time). A time may be used as event setting information regarding the event based on a data transformation end time. Although information shown in FIGURE 3A may be used as event setting information regarding the event based on an inter-device connection time, the present disclosure is not limited thereto.

FIGURE 3A shows a screen 310 to which event setting information may be input, according the present disclosure. The screen 310 of FIGURE 3A may be an example of a screen to which event setting information regarding an event based on an inter-device connection time may be input as described above.

A user may set information, such as an event occurrence period, an event occurrence time point, and event setting disablement, using the input unit 211 as the screen 310 of FIGURE 3A, which is output on the output unit 212. The event occurrence period and the event occurrence time point may be set based on at least one of a start of a specific operation (e.g., charging) of each of the user devices 120 and 130, an end of a specific operation (e.g., charging) thereof, and a specific time (e.g., at zero o'clock sharp).

When a region 311 is selected using the input unit 211 as the screen 310 of FIGURE 3A, a sub-screen 350 may be displayed as a pop-up window on the output unit 212. The sub-screen 350 may include selectable items 311, 312, 313, 314, and 315. A user may select one of the selectable items 311, 312, 313, 314, and 315 included in the sub-screen 350 using the input unit 211. For example, when the selectable item 311 is selected, an event may occur once a day. When the selectable item 312 is selected, an event may occur once every two days. The sub-screen 350 may not be displayed as a pop-up type but may be displayed on the screen 310 along with the selectable item 311.

When the selectable item 316 is selected using the input unit 211, a pop-up window of a sub-screen 360 may be displayed on the output unit 212, and one of a plurality of selectable items 316, 317, 318, 319, and 320 included in the sub-screen 360 may be selected using the input unit 211. For example, when the selectable item 316 is selected, an event may occur at a time point when charging is finished. When the selectable item 317 is selected, an event may occur at a time point when charging starts. When the selectable item 318 is selected, an event may occur at zero hours sharp.

The selectable items 311 through 315 and 316 through 320 included in the sub-screens 350 and 360, respectively, may be simultaneously set. For example, when the selectable items 311 and 316 are selected together, an event may occur at a time point when charging is finished once a day. When there is no time point when charging is finished in a day, no event may occur. For instance, when the selectable items 312 and 318 are selected together, an event may occur at zero hours sharp every two days. When a selectable item 330 is selected and time data is input to an input field of the selectable item 330 using the input unit 211, the user devices 120 and 130 may be connected to the PC 110 after time based on the input time data from the present time. When a selectable item 340 is selected, an event function set at the user devices 120 and 130 required for the connection of the user devices 120 and 130 to the PC 110 may be disabled.

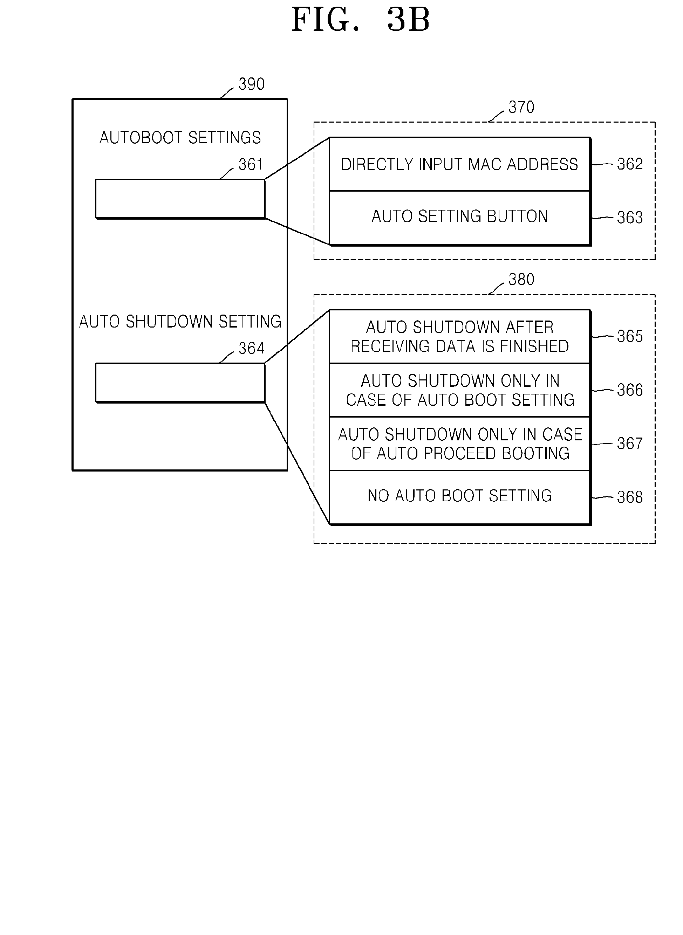

FIGURE 3B shows a screen 390 at which a condition for automatically controlling power of the PC 110 is set, according to the present disclosure. The power of the PC 110 may be automatically controlled using the input unit 211 based on the screen 390 of FIGURE 3B, which is displayed on the output unit 212.

An item 361 may be used to set a condition for automatically booting the power of the PC 110. When the item 361 is controlled using the input unit 211, a sub-screen 370 may be output on the output unit 212, and a user may select items 362 and 363 included in the sub-screen 370 and set a method of automatically booting the power of the PC 110. When the item 362 is selected using the input unit 211, a media access control (MAC) address of the PC 110 may be directly input using the input unit 211 to automatically boot the power of the PC 110. When the item 363 is selected using the input unit 211, the PC 110 may be automatically booted by controlling an auto-set button displayed on the output unit 212 during connection with the PC 110.

When an item 364 is controlled using the input unit 211, a sub-screen 380 for setting a condition for automatically shutting down the PC 110 may be output on the output unit 212. When an item 365 is selected, after the processor 240 receives data from the PC 110, the processor 240 may output a control signal to automatically shut down the power of the PC 110. In response to the selection of an item 366, the processor 240 may output a control signal for auto-shutdown after data is received when an auto-boot function is set at the PC 110. In response to the selection of an item 367, the processor 240 may output a control signal for auto shutdown when auto-proceed booting is performed by the PC 110. In response to the selection of an item 368, the processor 240 may not perform a control operation for automatically shutting down the PC 110.

The screens 310 and 390 of FIGURES 3A and 3B may be referred to as menu screens. The input unit 211 may be embodied by a touch interface using a touch panel or touch screen configured to generate an input signal according to a contact position of a finger or stylus pen. The input unit 211 may be combined with the output unit 212.

The output unit 212 may display the screens 310 and 390 shown in FIGURES 3A and 3B. The screens 310 and 390 may be referred to as screens for setting events and auto-boot and auto-shutdown functions. The output unit 212 may be embodied by a liquid crystal display (LCD), a thin-film transistor-LCD (TFT-LCD), an organic light-emitting diode (OLED) display, a flexible display, a 3-dimensional (3D) display, or an active-matrix OLED (AMOLED) display. Accordingly, the output unit 212 may be referred to as a display unit.

The storage unit 220 may store an application program and data required by the user devices 120 and 130 to perform a method of enabling auto-synchronization between devices, according to the present disclosure. The data may include event condition information and event type information input using the input unit 211. Although the application program stored in the storage unit 220 may be stored beforehand, the application program may be downloaded through the network interface unit 230 and stored. When the application program is downloaded through the network interface unit 230, the application program may be provided from an Application (App) store (not shown) . Also, the data stored in the storage unit 220 may include transformed data received from the PC 110.

The network interface unit 230 may enable the wireless network 140 to interface with the processor 240 to transmit and receive data.

The processor 240 may control all functions of the user devices 120 and 130. Although the processor 240 may be defined as a controller or a microprocessor, the present disclosure is not limited thereto. The processor 240 may load a program stored in the storage unit 220 to enable synchronization between devices, monitor events caused in the user devices 120 and 130 with reference to event-related information stored in the storage unit 220, and control a function of connection between the devices.

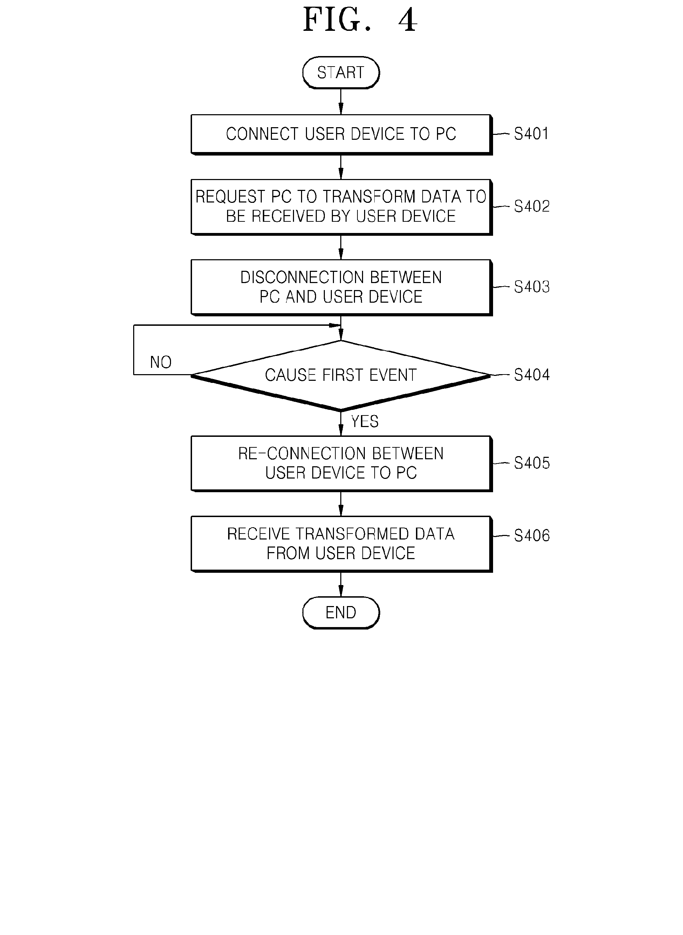

Specifically, the processor 240 may operate as described with reference to FIGURE 4, which is a flowchart illustrating a method of enabling synchronization between devices in the user device 120 or 130, according to the present disclosure, which shows an example where the user device 120 or 130 remains in an idle state until a first event occurs after transformation of data of the PC 110 into target data for synchronization is requested.

Referring to FIGURE 4, the processor 240 connects the PC 110 to at least one of the user devices 120 and 130 through the network interface unit 230 (operation S401). In operation S401, the connection operation may be performed in response to a second event set using the same screen as shown in FIGURE 3A. Since the connection operation may be periodically performed in response to the set second event, if the PC 110 is connected to the user device 120, the connection operation may be performed at periods set at the user device 120. As described with reference to FIGURE 3A, the second event may be set based on at least one of a start of a specific operation of the user device 120, an end of the specific operation thereof, and a specific time. In this example, when power of the PC 110 is off, the processor 240 may transmit an auto-boot signal to the PC 110 through the network interface unit 230 according to an auto-boot function set as described with reference to FIGURE 3B. Thus, a user may not need to perform an additional operation of booting the PC 110 as a target device. Also, the processor 240 may connect the PC 110 to the user device 120 at a desired time in response to a previously set second event to enable data synchronization.

If the PC 110 is connected to the user devices 120, the processor 240 requests the PC 110 to transform data to be received by the user device 120 (operation S402). In this example, the processor 240 may check whether data to be received by the user device 120 is present by communication between the processor 240 and the PC 110 through the network interface unit 230 and request the transformation of data when the data is present.

After the transformation of the data is requested, the processor 240 may release the connection (or disconnect) between the PC 110 to the user device 120 (operation S403). After the connection is released, the processor 240 may monitor whether a first event occurs (operation S404). The first event may be an event caused based on a time at which the transformation of the data is finished by the PC 110. The first event may be set beforehand and stored in the storage unit 220.

After a result of the monitoring, when the processor 240 determines that the first event occurs, the processor 240 is re-connected to the PC 110 through the network interface unit 230 and receives the transformed data from the PC 110 (operations S405 and S406).

The method of FIGURE 4 may further include automatically shutting down the power of the PC 110 after receiving the transformed data. That is, after operation S406, the method of FIGURE 4 may further include transmitting a power shutdown request signal to the PC 110. The power shutdown request signal may be referred to as a power-off signal.

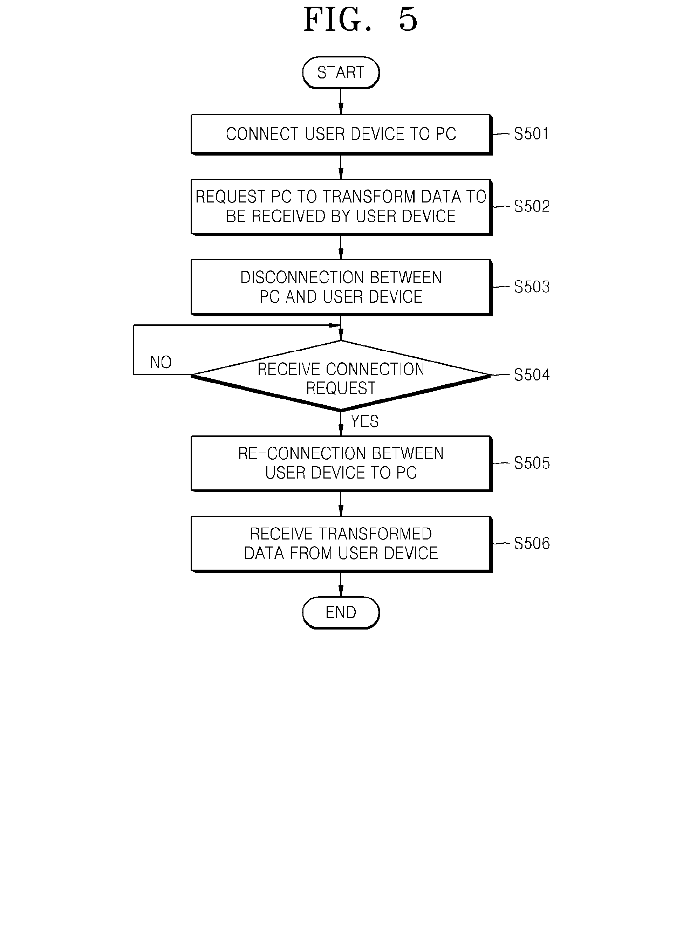

The processor 240 may operate as described with reference to FIGURE 5, which is a flowchart illustrating a method of enabling synchronization between devices in the user device 120 or 130 according to the present disclosure. The method of FIGURE 4 includes re-performing connection between devices in response to the occurrence of the first event, while the method of FIGURE 5 includes re-performing connection between one of the user devices 120 and 130 and the PC 110 when one of the user devices 120 and 130 receive a connection request from the PC 110. Accordingly, since operations S501 S502, S503, S505, and S506 may be performed similarly to operations S401, S402, S403, S405 and S406 of FIGURE 4, a description thereof will be omitted for brevity.

In an example of that PC 110 is connected to the user device 120 in operation S501 to S503, in operation S504, the processor 240 of the user device 120 determines whether the connection request is received from the PC 110. The connection request from the PC 110 may occur at a time point when transformation of data requested in operation S502 is finished. As a result of the determining, when the processor 240 determines that the connection request is received from the PC 110, the processor 240 re-performs re-connection of the user device 120 with the PC 110 in operation S505. Like in the method of FIGURE 4, when receiving data is finished, the method of FIGURE 5 may further include transmitting a request signal for shutting down power of the PC 110 from the user device 120 to the PC 110.

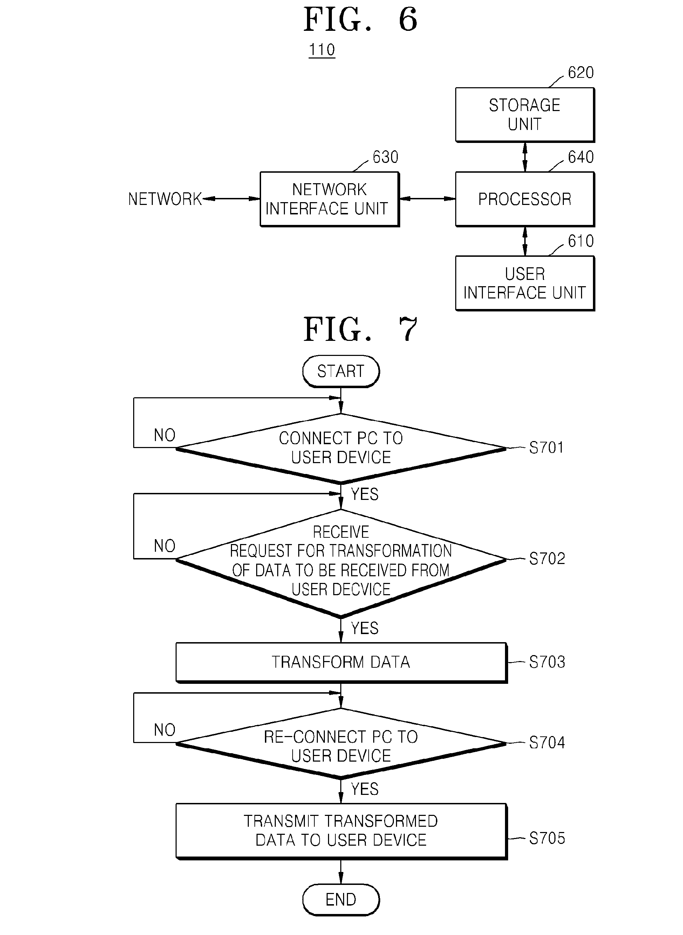

FIGURE 6 is a block diagram showing the structure of the PC 110 according to the present disclosure. Referring to FIGURE 6, the PC 110 may include a user interface unit 610, a storage unit 620, a network interface unit 630, and a processor 640. Components of the PC 110 may not be limited to the ones shown in FIGURE 6.

The user interface unit 610 may include an input unit and an output unit like the user interface unit 210 of FIGURE 2 and operate similarly as the user interface 210.

The storage unit 620 may store data and a program to be received by the user devices 120 and 130. The program may be a program for performing a method of enabling synchronization between devices. The program may be loaded on the processor 640 and executed.

The network interface unit 630 may interface with the wireless network 140 and enable data to be transmitted and received between the user devices 120 and 130 and the processor 640.

The processor 640, which may control all functions of the PC 110, may be referred to as a controller or a microprocessor, but the present disclosure is not limited thereto. The processor 640 loads the program stored in the storage unit 620 and performs a method of enabling synchronization between devices according to the present disclosure.

The processor 640 may operate as shown in FIGURE 7. FIGURE 7 is a flowchart illustrating a method of enabling synchronization between devices in the PC 110 according to the present disclosure, which shows an example where the user devices 120 and 130 operate as described with reference to FIGURE 4.

When the processor 640 determines that the user device 120 is connected to the PC 110 by the user device 120 (operation S701), the processor 640 determines whether a data transformation request from the user device 120 is received through the network interface unit 630 (operation S702). As a result of the determining, when the data transformation request is received, the processor 640 transforms data to be transmitted to the user device 120 (operation S703). Although a transformation process of the data may be determined according to standards of coding and de-coding (codecs) included in the user device 120 and the PC 110, the present disclosure is not limited thereto.

The processor 640 determines whether the user device 120 is re-connected to the PC 110 by the user device 120 (operation S704). Here, the re-connection of the user device 120 to the PC 110 refers to connection enabled in response to the first event caused in operation S404 of FIGURE 4. When the processor 640 determines that the user device 120 is connected to the PC 110, the processor 640 transmits the transformed data through the network interface unit 630 to the user device 120 (operation S705).

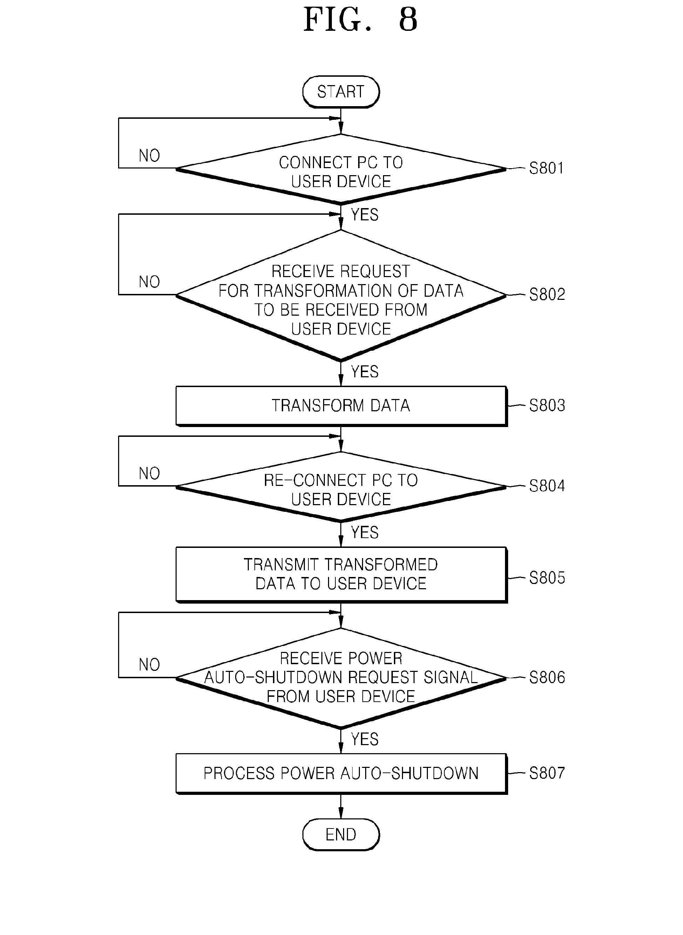

Meanwhile, the processor 640 may operate as shown in FIGURE 8. FIGURE 8 is a flowchart illustrating a method of enabling synchronization between devices in the PC 110, according to the present disclosure. The method of FIGURE 8 may further include automatically shutting down power of the PC 110, as compared with the method of FIGURE 7. Accordingly, since operations S801 to S805 of FIGURE 8 may be performed similarly to operations S701 to S705, respectively, a repeated description thereof will be omitted for brevity.

In an example where PC 110 is connected to the user device 120 in operation S801 to S805, in operation S806, the processor 640 determines whether an auto-power shutdown request signal is received from the user device 120 through the network interface unit 630. As a result of determining, when the processor 640 determines that the auto-power shutdown request signal is received, the processor 640 automatically shuts down the power of the PC 110 (operation S807) . In this example, the processor 640 may output a message for informing a user about auto-power shutdown through the user interface unit 610 and shut down the power of the PC 110 when the user agrees to the output message.

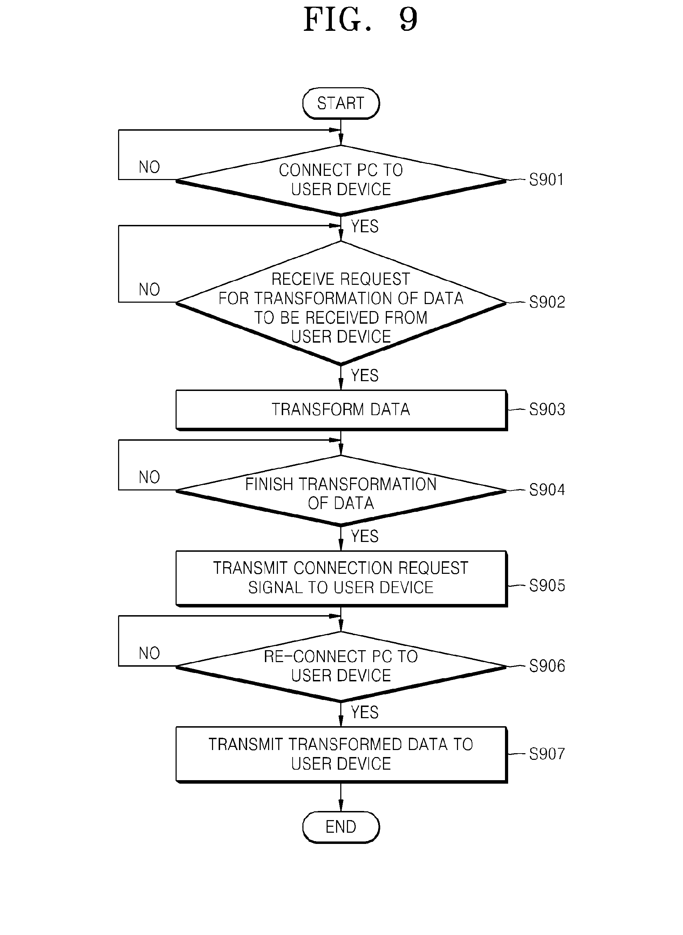

The processor 640 may operate as shown in FIGURE 9. FIGURE 9 is a flowchart illustrating a method of enabling synchronization between devices in the PC 110, according to the present disclosure. The method of FIGURE 9, which corresponds to the method of FIGURE 5, may further include transmitting a connection request signal to the user device 120 and re-performing connection of the PC 110 with the user device 120 when transformation of data is finished, in an example of that the method of FIGURE 9 enables synchronization between user device 120 and the PC 110.

Since operations S901 to S903 and S907 of FIGURE 9 may be performed similarly to operations S701 to S703 and S705 of FIGURE 7, respectively, a repeated description thereof will be omitted for brevity.

When transformation of data is finished in operation S904, the processor 640 transmits a connection request signal to the user device 120. Thus, when the PC 110 is re-connected to the user device 120 (operation S906), the processor 640 transmits the transformed data to the user device 120 (operation S907).

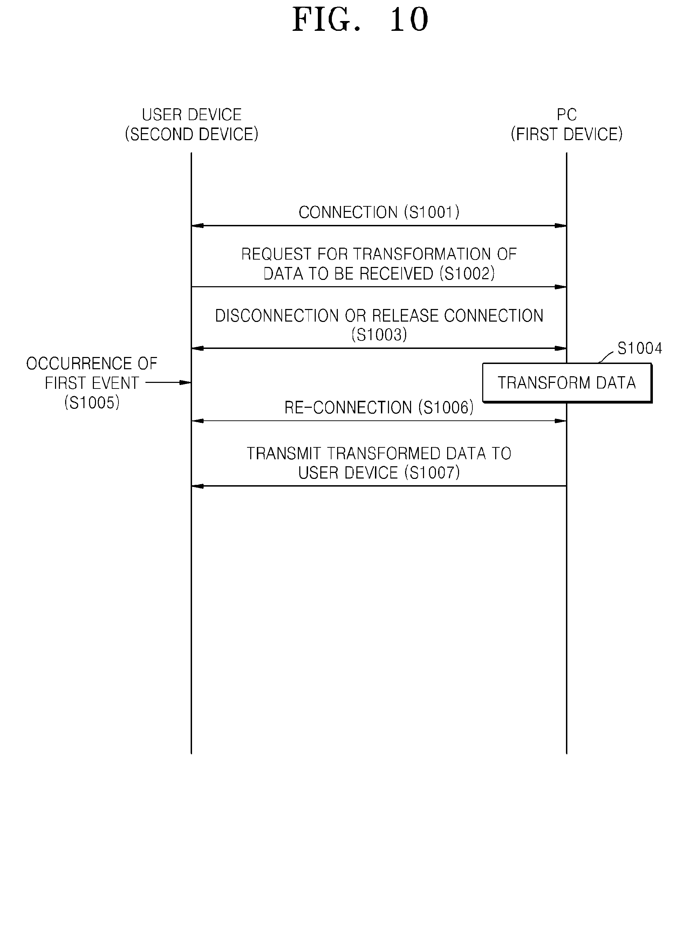

FIGURE 10 is a flowchart illustrating a method of enabling synchronization between the user device 120 or 130 (or second device) and the PC 110 (or first device), according to the present disclosure.

Referring to FIGURE 10, when the user device 120 is connected to the PC 110 (operation S1001), the user device 120 requests to transform data to be received (operation S1002) and releases the connection of the user device 120 with the PC 110 (operation S1003). In this example, although the user device 120 may be set in an idle state, the user device120 may perform another operation. As a result, the user device 120 may not consume battery power due to synchronization. Also, due to the connection release, the channel of the wireless network 140 may be used by another device.

The PC 110 transforms data to be transmitted to the user devices 120 and 130 (operation S1004). In response to the occurrence of a first event in the user device 120 or 130, the user device 120 or 130 is re-connected to the PC 110 (operations S1005 and S1006) so that the PC 110 transmits the transformed data to the user device 120 or 130 (operation S1007).

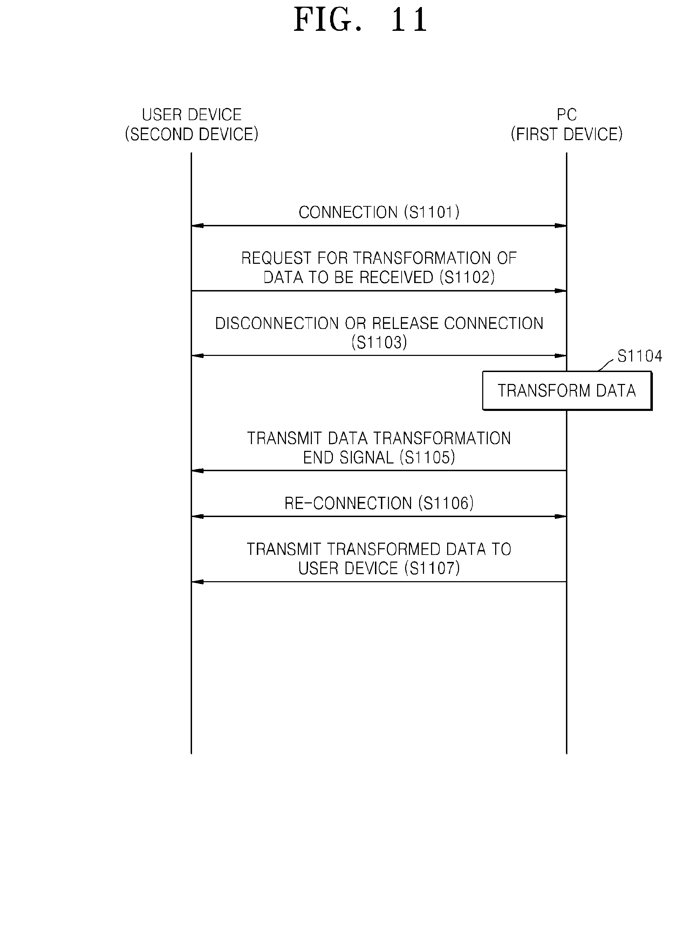

FIGURE 11 is a flowchart illustrating a method of enabling synchronization between the user device 120 or 130 and the PC 110, according to the present disclosure, when the user device 120 or 130 receive the transformed data from the PC 110 in response to a data transformation end signal transmitted from the PC 110 to the user devices 120 and 130. Accordingly, operations S1101 to S1104, S1106, and S1107 of FIGURE 11 may be performed similarly to operations S1001 to S1004, S1006, and S1007 of FIGURE 10, respectively. When the transformation of data is finished in operation S1104 of FIGURE 11, the PC 110 transmits the data transformation end signal to the user device 120 or 130 (operation S1105). The data transformation end signal may be referred to as a connection request signal transmitted by the PC 110. Thus, the user device 120 or 130 is connected to the PC 110 so that the PC 110 transmits the transformed data to the user device 120 or 130.

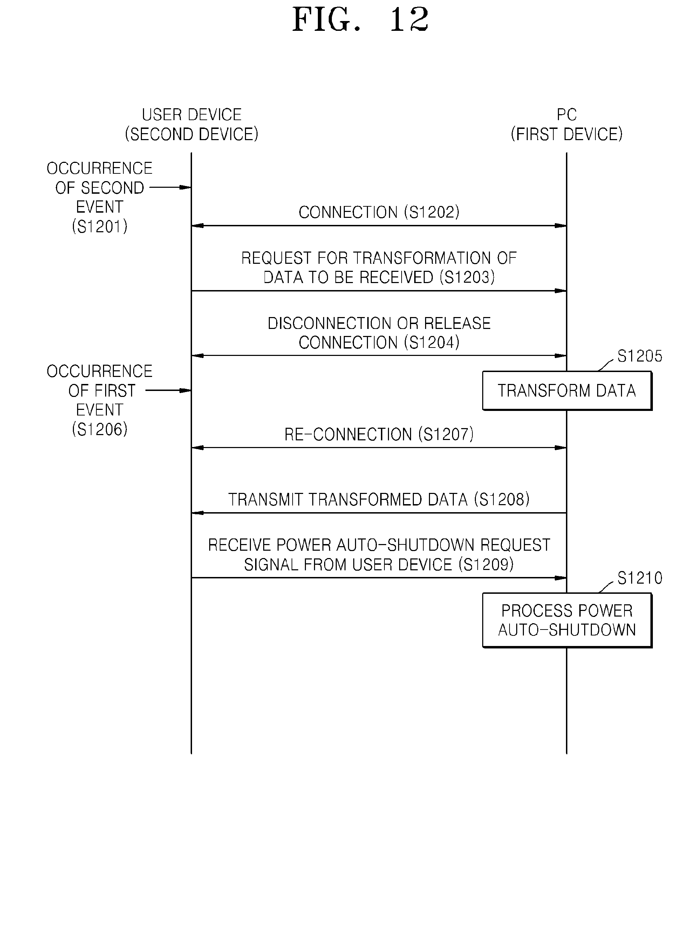

FIGURE 12 is a flowchart illustrating a method of enabling synchronization between the user device 120 or 130 and the PC 110, according to the present disclosure. A first event may be an event caused based on a data transformation end time in the PC 110, and a second event may be an event caused based on at least one of a start of a specific operation (e.g., charging), an end of a specific operation (e.g., charging), and a specific time (e.g., zero hours sharp), as shown in FIGURE 3A.

When the second event occurs in the user device 120 or 130 (operation S1201), the user device 120 or 130 is connected to the PC 110 and receives transformed data through the method described with reference to FIGURE 10 (operations S1202 to S1208). When the transformed data is received and an auto-power shutdown function for automatically shutting down power of the PC 110 is set at the user devices 120 and 130, as shown in FIGURE 3B, the user device 120 or 130 transmits an auto-power shutdown signal to the PC 110 based on set conditions (operation S1209). Thus, the PC 110 may serve an auto-power shutdown operation (operation S1210). During the auto-power shutdown operation, the PC 110 may output a guide message or an announcement message through the user interface unit 610, as in operation S807 of FIGURE 8.

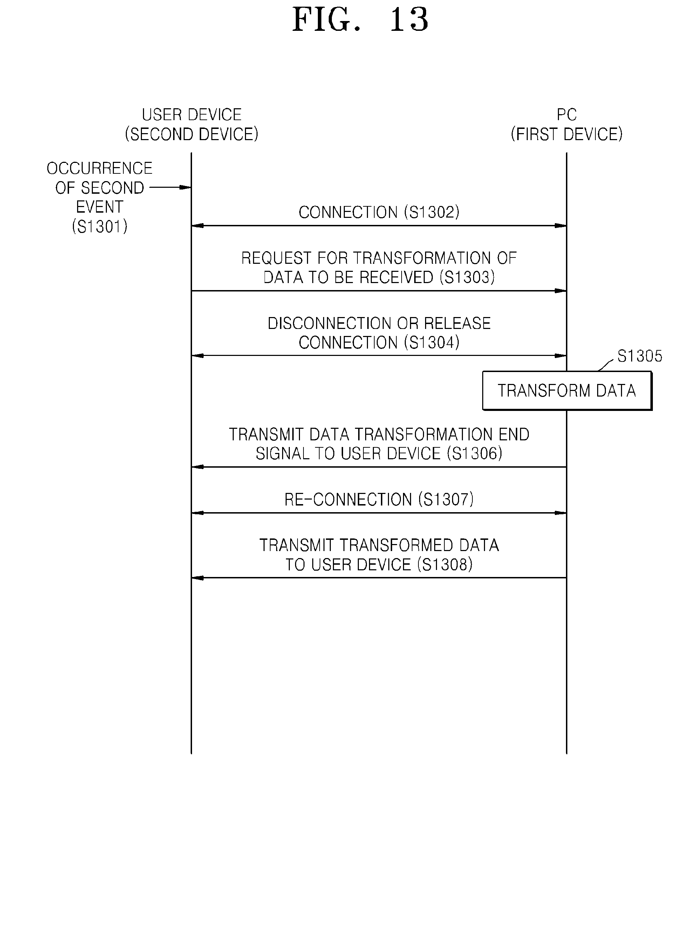

FIGURE 13 is a flowchart illustrating a method of enabling synchronization between the user devices 120 and 130 and the PC 110, according to the present disclosure, which shows an example where the user device 120 or 130 is connected to the PC 110 in response to the second event as described with reference to FIGURE 12, and the user device 120 or 130 is re-connected to the PC 110 in response to a data transformation end signal transmitted by the PC 110. Thus, operations S1301 to S1305 of FIGURE 13 may be performed similarly to operations S1201 to S1205 of FIGURE 12, and operations S1306 to S1308 of FIGURE 13 may be performed similarly to operations S1105 to S1107 of FIGURE 11, respectively.

In FIGURES 4, 5, and 7 through 13, each of the user device 120 or 130 may be referred to as a second device, as described above with reference to FIGURE 1, and the PC 110 may be referred to as a first device. Although the above-described embodiments provide methods of enabling auto-synchronization between one (user device 120) of the user devices 120 and 130 and the PC 110, auto-synchronization between the user devices 120 and 130 or between the user devices 120 and 130 and PC 110 or between the user device 130 and PC 110 may be performed as described above with reference to FIGURE 1.

A program for executing a method of enabling synchronization between devices, according to various embodiments of the present disclosure, can be embodied as computer-readable codes on a computer-readable recording medium. The computer-readable recording medium is any data storage device that can store data which can be thereafter read by a computer system. Examples of the computer-readable recording medium include read-only memories (ROMs), random-access memories (RAMs), CD-ROMs, magnetic tapes, floppy disks, and optical data storage devices. The computer-readable recording medium can also be distributed over network-coupled computer systems so that the computer-readable code is stored and executed in a distributed fashion.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method of enabling synchronization between devices, the method comprising:
connecting a second device to a first device;
requesting the first device to transform data to be received by the second device and disconnecting the second device from the first device;
re-connecting the second device to the first device in response to an occurrence of a first event set at the second device; and
receiving the transformed data from the first device.

2. The method of claim 1, wherein the first event is a time at which transforming of data is finished in the first device.

3. The method of claim 1 or 2, wherein connecting the second device to the first device is performed at periods set at the second device.

4. The method of claim 1 or 2, wherein connecting the second device to the first device is performed in response to an occurrence of a second event set at the second device.

5. The method of claim 4, wherein the second event occurs based on at least one of a start of a specific operation of the second device, an end of the specific operation of the second device, and a specific time.

6. The method of claim 1 or 2, wherein connecting the second device to the first device includes transmitting an auto-boot signal for automatically booting the first device from the second device to the first device.

7. The method of claim 1 or 2, wherein receiving the transformed data comprises automatically shutting down, by the second device, power of the first device when the receiving of the transformed data is finished.

8. The method of claim 1 or 2, wherein the data is a target for synchronization between the first and second devices.

9. A storage medium having embodied thereon a computer program configured to execute the method of claim 1.

10. The method of claim 1 or 2, wherein the re-connecting the second device to the first device is performed when a connection request signal is received from the first device.

11. The method of claim 10, wherein the connection request signal received from the first device is based on a time point at which transforming of the data is finished by the first device.

12. A user device comprising:
a network interface unit configured to interface with a network;
a processor configured to request a second device connected to the user device through the network interface unit to transform data to be received from the second device, disconnect between the user device and the second device, re-connect the user device to the second device through the network interface unit when a first event occurs, and receive the transformed data from the second device;
a storage unit configured to store information regarding the first event and the received transformed data; and
a user interface unit configured to receive the information regarding the first event.

13. The user device of claim 12, wherein the first event is a time point at which transforming of the data is finished in the second device.

14. The user device of claim 12 or 13, wherein the storage unit further stores period information regarding periods at which the second device and the user device are connected, and the processor connects the second device and the user device based on the period information.

15. The user device of claim 12 or 13, wherein the storage unit further stores information regarding a second event, and the processor connects the second device and the user device in response to the occurrence of the second event.
